# EUROPEAN PATENT SPECIFICATION

(11) **EP 1 588 068 B1**
(45) Date of publication and mention of the grant of the patent: **07.03.2012**
(21) Application number: 04701448.5
(22) Date of filing: 12.01.2004
(51) Int. Cl.: F16D 1/05, F16D 1/09, F16D 25/0632

(54) **A COMPRESSIVE COUPLING ARRANGEMENT**
PRESSKUPPLUNGSANORDNUNG
SYSTEME D'ACCOUPLEMENT COMPRESSIF

(30) Priority: 13.01.2003 SE 0300038; 09.10.2003 SE 0302675
(43) Date of publication of application: 26.10.2005
(73) Proprietor: Voith Turbo Safeset AB, 824 11 Hudiksvall (SE)
(72) Inventor: FALK, Curt, Gunnar, S-824 51 Hudiksvall (SE)
(74) Representative: Lindblom, Erik J
(86) International application number: PCT/SE2004/000016
(87) International publication number: WO 2004/063586

(56) References cited:
- DE-A1- 19 809 638
- US-A- 4 525 916

## Description

### TECHNICAL FIELD OF THE INVENTION

The present invention relates generally to an arrangement in connection with a compressive coupling and more particularly to one such arrangement in which the compressive action of a sleeve or hub against an outer surface of a shaft provides such co-action between an outer surface of said shaft and an inner surface of said sleeve or hub as to enable the transmission of a driving force or torque in the absence of slip.

This compressive coupling arrangement causes a straightforward pressure bound or shrink fit, which for its power transmitting capacity depends solely on the interference friction between mounted components.

It is further to be noted that compressive coupling arrangements of this kind may be used in different applications such as; having an outer component, such as a hub, mounted directly onto a tapered shaft end section, having an outer component, such as a hub or a sleeve, mounted on an externally tapered intermediate sleeve or having an outer component, such as a hub or a sleeve, mounted on an internally tapered intermediate sleeve or similar applications.

The inventive arrangement is hereinafter described under an application based on the use of two mutually co-ordinated sleeves that have mutually facing and matching and mating conical and correspondingly formed surfaces.

The compressive action against an outer cylindrical surface of the shaft is achieved by moving axially a first sleeve, the outer sleeve, relative to a second sleeve, the inner sleeve, such as to press the inner sleeve radially against the outer cylindrical surface of said shaft with the aid of the successive, forced radial expansion of said outer sleeve, therewith obtaining said slip-free co-action between the inner sleeve and an end section of a shaft.

In order to achieve this compressive co-action, the outer sleeve shall, on the one hand, have an inner conical surface of small conicity, and said inner sleeve shall have an outer conical matching and mating surface of the same conicity, and, on the other hand, have an inner cylindrical surface adapted to said shaft, this latter cylindrical surface being dimensioned to enable it to surround the shaft with an adapted small tolerance in a non-compressed state, and therewith enable said sleeve to be readily moved axially along cylindrical shaft sections.

With the aid of a heavily dimensioned outer sleeve or the like (hub) serving as a component, the coupling is based on creating a forced expansion of said outer sleeve by moving this outer sleeve axially in relation to the thinner inner sleeve during a successive radial expansion of the outer sleeve, wherewith the inner sleeve is subjected to successive radial compression, all within the elastic limits of the material by the successive radial expansion of the outer sleeve, therewith creating radially directed clamping forces and a compression of the end section of the shaft as a result of the clamping action thus achieved.

The axially directed relative movement between the outer sleeve and the inner sleeve requires the inner conical surface of the outer sleeve to slide along the mating outer conical surface of the inner sleeve. This relative displacement of the surfaces is facilitated by providing at least one passageway through which a pressurized media or lubricant media, such as oil, under high pressure can be delivered to and between said surfaces, where the actual displacement of the surfaces is generated with the aid of a first means. This first means is previously known and may be active between the first sleeve and the second sleeve (or the shaft).

This first means is adapted to cause the outer sleeve to move axially in relation to the inner sleeve in a first direction (or in a second, opposite direction) at least in the presence of said media or oil under high pressure between said mating surfaces which, in this respect, function as axially directed "slide surfaces", wherein said first direction or said second opposite direction will depend on whether the coupling shall be fitted to or dismantled from one or two shaft surfaces for instance.

Although couplings of the kind described in the introduction and including different arrangements to this end can be used in very general applications, the invention will be described more specifically with reference to a shaft coupling where the inner sleeve embraces a respective end-section or end-portion of a driven and a drivable shaft with the extensions of the centre lines through the end surfaces of the shafts coinciding with each other.

### DESCRIPTION OF THE BACKGROUND OF THE INVENTION

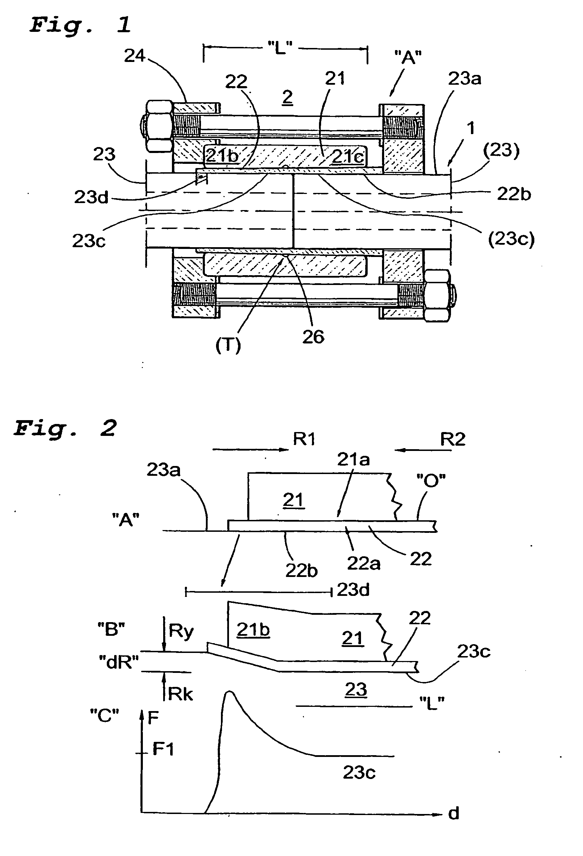

Several different methods and designs of the aforesaid nature are known to the art including some known shaft-end-related arrangements particularly applicable to those illustrated in Figures 1 and 2, which will be described in more detail by way of example in the following description.

In this regard, it is known that very high elastic stresses will act on the cylindrical shaft surface, such as the end-section or end-portion, along the inner sleeve in a more or less well-distributed fashion, as a result of the co-ordinated and well-distributed compressive force generated by the outer sleeve. It is also known to dimension the length of the inner sleeve and to adapt the length of the outer sleeve and its compressive forces against the inner sleeve, so that said length will correspond to a desired transferable torque. This length is referred to hereinafter as an "effective or active length" and is kept as short as possible for natural reasons within a sufficient safety framework in respect of the coupling and with power effects adapted to maximum elastic forces.

In each clamping joint or coupling of this kind there also occurs compressive elastic deformation of that part of the shaft (the shaft end or ends) surrounded by the inner (and the other) sleeve.

When the shaft is chosen hollow-shaped, high shaft-compressing forces will occur within the length section of the second sleeve.

It is therewith apparent that the compressive shaft-related forces occurring within and along the inner sleeve will be relatively constant within said "effective or active length" but will cease in the proximity of the end-portion (or end-portions) of the sleeve and quickly diminish to zero externally of the sleeve.

This gives rise to complex force components within said short shaft range (or ranges) that can be considered to connect with forces having a structure corresponding to so-called "shear forces", which sometimes appear as shear strain and concentrated shear stress.

One application that has been found particularly suitable is to fixedly connect the shaft ends or end-sections of mutually opposed shaft sections or shaft portions in a torque transmission between an engine and a propeller of a ship with the aid of said coupling arrangement. Although relatively rare, the coupling may be capable of being dismantled.

The earlier standpoint of techniques also includes the contents of U. S. Patent Specification 4,525,916. The preamble of claim 1 is based on this document.

The technical development of a clamping coupling of the aforesaid kind can be considered to have its starting point in the embodiments illustrated in Figures 1 and 2. However, because the provision of a first means used, for instance, to move the outer sleeve over the inner sleeve is quite time-consuming, the development of such couplings has progressed towards a first means in the form of a hydraulically activated piston-cylinder device, see for instance US-A-4 525 916.

Figure 2C illustrates the high shear-acting forces (stresses) that will occur along the shaft and that occur within concentrated small shaft sections in connection with the end-portions of the outer and the inner sleeve.

The prior art also includes the publication "Oil injection Method", issued by SKF, Sweden; under publication number 2930 E (Reg. 41344 - 3000, 1975-9) and here reference is made especially to the content of page 18.

### SUMMARY OF THE PRESENT INVENTION

### TECHNICAL PROBLEMS

When taking into consideration the technical deliberations that a person skilled in this particular art must make in order to provide a solution to one or more technical problems that he/she encounters, it will be seen that it is necessary initially to realise the measures and/or the sequence of measures that must be undertaken to this end, on the one hand, and to realise which means is/are required to solve one or more of said problems, on the other hand. On this basis, it will be evident that the technical problems listed below are highly relevant to the development of the present invention.

When considering the earlier standpoints of technique, as described above and as described below in more detail with reference to the accompanying Figures 1 and 2, it will be seen that a technical problem resides in the ability to create conditions which enable appearing high forces, occurring as shear forces, to be reduced and/ or distributed with the aid of a simple device or by using simple measure, hereinafter referred to as a second means, said high forces being active in the case of earlier technology over a very short axially extending shaft section in connection with the end-portion or portions of a fixedly mounted clamping coupling that functions as a torque transfer coupling.

A technical problem also resides in the ability to realise the significance of and the advantages afforded by including said first and said second means in a ring-shaped recess in a conical surface of the outer sleeve or the like, and using a ring, which is placed in the recess and which has generally the same radial dimension as said recess although with a smaller axial length than said recess, a channel for introducing a pressurised lubricant medium, such as hydraulic fluid (oil),between the recess and the ring, for clamping the ring firmly to the inner sleeve, and channels for conducting pressurised hydraulic fluid to and from respective axial ends of the recess.

It will also be seen that a technical problem resides in the creation of a second means by simple mechanical working of the end-portion or end-portions of solely an outer sleeve, such as to achieve selective reduction and/or distribution of said shear forces occurring in a coupling of the nature of the embodiment shown in and described with reference to Figure 1 and other applications.

When the outer sleeve is provided with an internal, circular groove adjacent the end surface of the sleeve or the like (usable as part of a piston-cylinder device) in particular, a technical problem resides in the ability to create conditions in connection with the outer sleeve such that groove-related forces and sleeve-related bending forces, both active against the shaft or shafts, can be reduced and/or apportioned values acceptable with regard to a chosen application.

In addition, a technical problem resides in the ability to realise the significance of and the advantages afforded by allowing said second means to consist of an inner circular groove and/or recess provided in the end-portion (or end-portions) of the outer sleeve or the like at a short distance from an end-surface of said sleeve, among other things.

Another technical problem resides in the ability to realise the significance of giving the outer sleeve, as said second means, a tapering and/or a bevelled form solely in connection with the outer surface and edge-portion that has the largest diameter in cross-section so as to achieve apportioning or distribution of the active forces.

Yet another technical problem resides in the ability to realise the significance of and the advantages afforded by co-ordinating said first and said second means to form a single unit, that can cause displacement of the outer sleeve or the like in relation to the inner sleeve or the like and said shaft, and that can apportion or distribute shear-like forces.

It will also be seen that a technical problem resides in the ability to realise the significance of and the advantages afforded by co-ordinating and adapting said first and said second means for co-action with said outer sleeve or the like in connection with that end-portion that has the smallest diameter in cross-section.

Another technical problem resides in the ability to realise the significance of and the advantages afforded by allowing said second means to include an hydraulic piston-cylinder device with which the function of the outer sleeve or the like corresponds to that of a displaceable piston and a ring, surrounding the inner sleeve or the like, has a function corresponding to that of a fixed cylinder.

A technical problem also resides in the ability to realise the significance of and the advantages afforded by integrating the first and the second means with the aid of a groove-shaped space, within the inner surface of the outer sleeve or the like, among other things, said space being delimited by an outer surface part of the inner sleeve or the like.

In this regard, a technical problem resides in the ability to realise the significance of and the advantages afforded by providing said outer groove in the end-portion of the outer sleeve or the like at a short distance from the end surface of said outer sleeve or the like.

A technical problem also resides in the ability to realise the significance of and the advantages afforded by providing on the outside of the outer sleeve or the like, at least at one end-portion thereof, a recess which substantially reduces the radial thickness of the outer sleeve or the like in an axial direction towards its end, and therewith reducing the flexural rigidity that would otherwise be displayed along the short axially-divided shaft section.

### SOLUTION

The present invention takes as its starting point the afore described known technique as stated in the preamble of claim 1.

With the intention of solving one or more of the aforesaid technical problems, it is proposed, in accordance with the present invention, the features stated in the characterizing part of claim 1.

By way of suggested embodiments that will lie within the scope of the inventive concept, it is proposed the features stated in the subclaims.

### BRIEF DESCRIPTION OF THE DRAWINGS

Known techniques and at present proposed embodiments comprising features significant of the present invention will now be described in more detail by way of example with reference to the accompanying drawings, in which;
**Figure 1** is a side view of a first embodiment of a known coupling, in which said coupling is shown in the final stages of mounting the coupling on end-to-end orientated shafts,
**Figure 2** illustrates at **A** one end region of a first sleeve, an outer sleeve, and a second sleeve, an inner sleeve, of a coupling according to Figure 1, while **B** is an exaggerated illustration of the compressive change in the dimension of a shaft portion located in connection with one (or both) end-portion of the coupling, and C illustrates a force-length diagram representing the surface forces distribution that act on an outer shaft section, or more correctly a shaft surface section, connecting with the end-portion of the coupling,
**Figure 3** is a side view illustrating an example of an alternative application to the application shown in Figure 1, wherewith a hub or a wheel, in the form of a toothed wheel, can be drivingly applied to a shaft and a shaft section through the medium of a coupling arrangement according to the invention,
**Figure 4** is a side view (and a sectioned view) of a first embodiment of a first sleeve, an outer sleeve, in a coupling-mounted position, and providing the function of a second means, in accordance with the directives of the invention, wherein the outer sleeve is worked mechanically such as to reduce the bending resistance active within one end-portion of the sleeve,
**Figure 5** is a side view (and a sectioned view) of a more complete arrangement in accordance with the directives of the invention.
**Figure 6** is an enlarged view of some of the components of the inventive arrangement relating to the embodiments shown in Figure 5,
**Figure 7** is a schematic side view and sectioned view of another coupling fitted to two mutually adjacent shaft ends while using a piston-cylinder device, in the form of a separate unit, for displacement of the outer sleeve relative to the inner sleeve and the shaft, and
**Figure 8** is a side view and a sectioned view of a coupling with which a piston-cylinder device is active to press or pull against the outer sleeve, the embodiments of Figures 7 and 8 not being part of the invention.

### DESCRIPTION OF THE KNOWN TECHNIQUES AS ILLUSTRATED IN THE EMBODIMENTS SHOWN IN FIGURES 1 AND 2

As before mentioned, Figure 1 illustrates a terminating mounting sequence of an arrangement 1 relating to a clamping coupling 2, which utilises the compressive action of two sleeves 21, 22 against the outer cylindrical surface 23a of a shaft 23.

The arrangement 1 is adapted for movement of a first sleeve 21, an outer sleeve, relative to a second sleeve 22, an inner sleeve, during a mounting sequence, with the aid of an axially acting first means **A,** which functions to displace the sleeve 21 axially in relation to the sleeve 22 and which has the form of a screw joint or clamping joint 24 in the Figure 1 embodiment.

The outer sleeve 21 has a conical inner surface 21a (Figure 2), which may be referred to as a "slide surface" with regard to said mounting sequence, and said inner sleeve 22 has a conical outer surface 22a, which can also be referred to as a "slide surface" with regard to said mounting sequence, and an inner, shaft-adapted cylindrical surface 22b.

Different dimensioning rules are known with regard to the desired co-action between the sleeves 21, 22 and the shaft 23, including an "active length" among other things.

This "active length" has been illustrated in Figure 1 with the reference sign "L".

The length "**L**" may correspond to the length of the outer sleeve 21.

The cylindrical surface 22b is dimensioned to enable the sleeve 22 to surround and move axially along the shaft 23 and its outer cylindrical surface 23a with a small tolerance, however in the absence of any outer pressure or load acting on the outer surface of said sleeve 22.

Figure 1 illustrates the state in which the sleeves 21 and 22 have been driven and moved by the screw or clamp joint 24 with the aid of shown nuts and bolts to a position in which the sleeves are fully active with regard to their coupling effect and in which the clamping joint 24 shall be removed.

In this fully co-operative position (Figure 2A), clamping forces act radially inwards from an expanded outer sleeve 21, within the elastic region of the material used, against an inner sleeve 22, which is duly compressed within the elastic region of the material used, said sleeve 22, in turn, exerting corresponding clamping forces on the outer shaft surface 23a (or forces that are slightly weaker than said corresponding forces).

This condition is illustrated in an exaggerated view in Figure 2B.

The occurrence of the forces active between the inner cylindrical surface 22b of the inner sleeve 22 and the outer cylindrical surface 23a of the shaft 23 as a result of said clamping effect shall be capable of creating a non-slip torque-transfer clamping effect and coupling within the active length "**L**".

At least one channel 26, connected to a pressure source **"T",** not shown in detail, is adapted to deliver oil under high pressure to and between said surfaces 21 a, 22a (Figure 2) with the aid of said first means **A** acting between the outer sleeve 21 and the inner sleeve 22, said means **A** having the form of a screw or clamp joint 24 in Figure 1.

The first means **A** is adapted for moving the outer sleeve 21 axially in relation to the inner sleeve 22 in a first direction "R1" when mounting the coupling, and in a second, opposite direction "R2", when removing or dismantling the coupling 2, at least with the aid of an oil film "O" of chosen oil pressure established between the surfaces 21 a and 22a.

When considering the coupling 2 in a mounted state, it can be assumed that the conical surface 21 a of the outer sleeve 21 will be in abutment with and matching the mated conical surface 22a of the inner sleeve 21 with a constant (or at least generally constant) compressive force along the active length "**L**", and that the conical surface 22a of said sleeve 22 is, in turn, in compressive abutment with the outer part or surface 23c of the shaft or with the end-related surface parts 23c (23c) of the shafts 23 (23).

As will be evident from the exaggerated illustration in Figure 2B, a complex pattern of forces is active within a short shaft section 23d, these forces being represented in a simple fashion in Figure 2C, despite being referred to as "shear forces" in the following text.

These forces must be kept within a given chosen value depending on the following parameters, chosen torque transmission, chosen shaft diameter, chosen shapes and dimensions of the sleeves, the measures adopted with regard to the relationship between the length of the outer sleeve 21 and the length of the inner sleeve 22, the choice of material for the outer sleeve and/or the choice of material for the inner sleeve, the chosen conicity, and so on.

It should be noted in particular that there is a desire to be able to drive the loading stresses to the greatest possible extent within the elastic limits of the material and therewith risk the build-up of a local overload which may result in undesirable plastic flow in said material, particularly in the material concentrated around the short shaft section 23d.

Figure 2C is a simplified force-length diagram which indicates the stresses that become active within the section 23d of the shaft 23 in the vicinity of the end-portions (21d, 21c) of the sleeves 21, 22, where a significant loading top is assumed to occur. The constant pressure of force. "F1" represents a chosen clamping force in respect of the coupling 2.

It can be assumed for good reason that when the outer sleeve 21 is pressed and moved over the inner sleeve 22, the shaft 23 will also be compressed along the active length "**L**".

Figure 2B shows the reduction "dR" in radius, where "Ry" denotes the outer diameter of the shaft 23 in the absence of any influence from a clamping joint, whereas "Rk" denotes the outer diameter of the shaft 23 as a result of the full clamping effect of the joint and its sections.

The shaft section 23d extends between the diameters represented by "Ry" and "Rk" respectively.

As will be seen from the exaggerated illustration in Figure 2B, the end region 21 b of the outer sleeve 21 (and also the end region 21 c) will be subjected to a degree of expansion that is greater than that applicable to the remainder of the active length "L", and therewith increase the force and the force concentration with a high force derivative, as Figure 2C is intended to illustrate.

It is one intention of the present invention to provide second means and second measures for reducing these forces and force derivatives occurring in the shaft section 23d and to equalise force peaks.

### DESCRIPTION OF EMBODIMENTS AT PRESENT PROPOSED

It is pointed out initially that in the following description of embodiments at present proposed and having the characteristic features of the present invention and illustrated in the figures of the accompanying drawings, we have elected to use terms and special terminology with the primary intention of illustrating the concept of the invention more clearly.

However, it will be noted that the expressions chosen here shall not be seen as being limited solely to the actual terms used in the description but that each term shall be interpreted as also including all technical equivalents that function in essentially the same way so as to achieve essentially the same intention and/or technical effect in equalising the high force concentrations that become active on the shaft 23 or the shafts 23, (23) in the region of one end-portion or mutually opposite end-portions of the sleeves used and respective shaft sections.

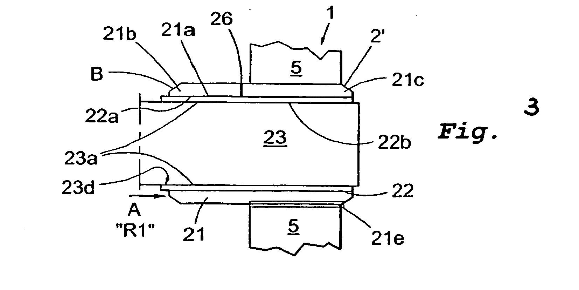

Illustrated schematically in Figure 3 is an alternative to the coupling 2 according to Figure 1, where the inventive coupling 2' is used for driving a wheel, a gearwheel or some other torque transferring unit 5.

It is hereby noted that in the introductory section of the present application is has been presented a number of different applications using none, one or two sleeves for causing a coupling arrangement to a shaft section.

The following description over now preferred embodiments do not describe each of these applications and additional coupling arrangements as a person skilled in this technical field are aware of the steps to be taken for applying the features of the present invention to a hub, to one sleeve only or to two mating sleeves to a shaft design and similar considerations.

In the case of the embodiment illustrated in Figure 3, there is nothing to prevent the use of a wedge-shaped groove 21e provided in the outer sleeve 21.

The present invention discloses an arrangement pertaining to a pressure or shrink fit coupling 2' of the afore described nature, where a contribution of the invention lies in the realisation of creating a second means or taking one or more co-ordinated additional measures that will provide a well-formed "elastic zone" adjacent a sleeve or a hub end-portion or portions thereof, and therewith distribute along the shaft and its sections 23d and 23d' respectively such force concentrations as those that would otherwise occur (Figure 2B ) as or in connection with shear forces.

Although the second means in the form of one or more co-ordinated measures have been concentrated on the first or outer sleeve 21, it will be understood that second co-ordinated means related to the inner sleeve 22 and/or the shaft 23 also lie within the framework of the invention.

The invention is also based on the possibility of using different material in the outer and/or the inner sleeve, such as to enable achievement of the technical effect of enabling the force concentrations that would otherwise act against the shaft to be distributed through an adapted axially extending shaft section 23d or 23d' adjacent one or both end regions of the coupling 2'.

The second means "**B**" shall be adapted to provide a reduction in and/or a distribution of otherwise occurring end-related and radially active compressive forces from the end-portion or end-portions of said outer sleeve to the end-portion or end-portions of the inner sleeve and to the cylindrical shaft surface or shaft sections 23d and 23d' respectively in the region of said end-portions.

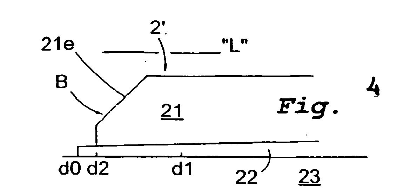

Figure 4 is a side view and cross-sectional view of an embodiment that however does not represent the invention. Shown in Figure 4 on one side thereof is a respective force-length diagram applicable to the embodiment illustrated in said figure.

The way in which the formation of the second means in the outer sleeve 21 affects the force-length diagram will be obvious to the person skilled in this art.

In the case of a first embodiment of the invention shown in Figure 4, the second means "**B**" results in a reduction 21 e in the material located in the region of the end-portion or end-portions of the outer sleeve 21, therewith obtaining a more local reduction in bending resistance.

A deeper bevel will result in a lower end-related bending resistance of the outer sleeve 21 than that illustrated, whereas a thinner bevel will result in a higher end-related bending resistance.

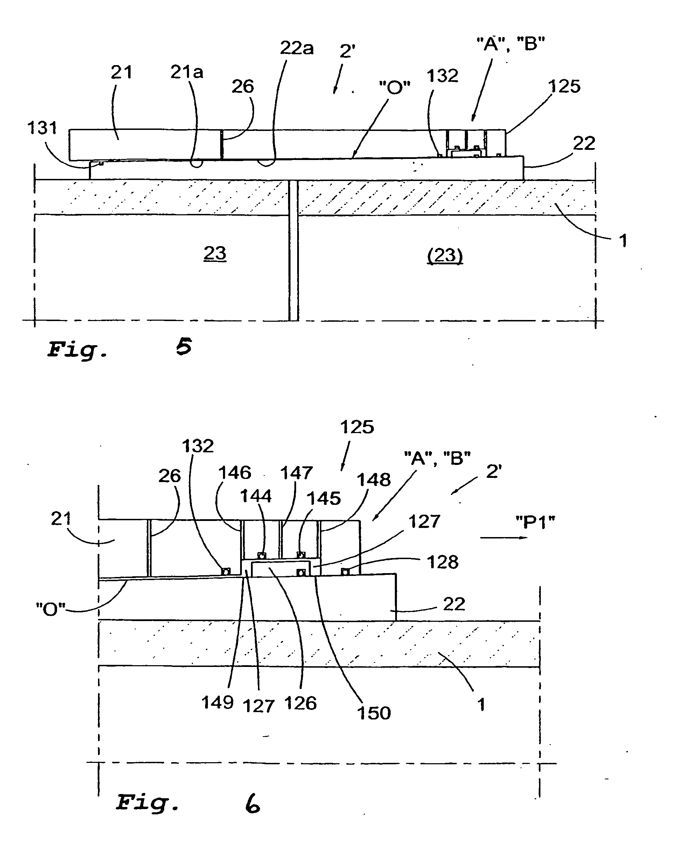

With reference to the embodiment described hereinafter with reference to Figures 5 and 6, the embodiment, it will be noted that the first means "**A**" and the second means "**B**" comprise an hydraulic piston-cylinder device 125, where the outer sleeve 21 has the function of a displaceable piston and a ring 126 encircling the inner sleeve 22 has the function of a fixed cylinder.

Among other things, the first means "**A**" and the second means "**B**" are formed integrally in a groove-like space 127 in the outer sleeve 21, said space being delimited by an outer surface-portion of the inner sleeve 22.

More specifically, it will be seen that the first means **A** and the second means "**B**" are co-ordinated to form an internal unit that can co-act fixedly with a groove or recess in the first sleeve 21 and that is active against an end surface of the second sleeve functioning as a counter-pressure surface.

Thus, the first means "**A**" and the second means "**B**" include a ring-shaped recess in the conical surface of the first sleeve, a ring 126 which is placed in the recess and which has generally the same radial dimension as said recess although a smaller axial length than the recess, a channel for introducing a pressurised hydraulic fluid (oil) between the recess and the ring for clamping the ring firmly against the second sleeve 22, and channels for conducting pressurised hydraulic fluid to and from respective shaft ends of the recess.

Figure 5 is a sectioned side view of two axially aligned hollow shafts 23, (23).

A clamp coupling 2' is mounted over a join between said shafts 23; (23).

The coupling 2' includes, in a known manner, an inner sleeve 22 which has a cylindrical inner surface and which is dimensioned to generally surround the shafts 23, (23).

The inner sleeve 22 has, in cross-section, a cylindrical conical outer surface with a conicity in the range of 1:30-1:100, for instance.

The outer sleeve 21 has a matching and mating conical inner surface 21 a, which is complementary to the conical surface 22a of the inner sleeve 22.

A ring-seal 131 is mounted on the thin end-portion of the inner sleeve 22 such as to seal against the conical surface of the outer sleeve 21.

The outer sleeve 21 has at its thinner end a ring seal 132 which seals against the conical surface of the inner sleeve 22.

The outer sleeve 21 includes a channel 26, which extends to a conical gap between the sleeves 21 and 22.

When lubricant, as oil, is forced under high pressure through the channel 26, there is established a supporting film (oil film) "O" in the gap between the sleeves 21, 22 and between the seals 131, 132, so as to enable the sleeve 21 to be driven axially up on the sleeve 22 by a relative axial displacement, so that the sleeves 21, 22 will together clamp the inner sleeve 22 firmly onto the shafts 23, (23) and therewith mutually connect said shafts.

A clamping device 125 in the right-hand part of the coupling 2, in the form of a piston-cylinder device, is shown incorporated in one sleeve, namely the outer sleeve 21.

The device 125 can be driven incrementally such as to drive the outer sleeve 21 up onto the inner sleeve 22 in increments, and vice versa.

In the case of the Figure 6 embodiment, the device 125 includes a recess 127 in the outer sleeve 21, preferably on the end of the sleeve 21 that has the greater internal diameter.

The recess 127 has the form of a generally cylindrical lathe-turned cavity, which receives a generally cylindrical ring 126 whose axial length is slightly smaller than the axial length of the cavity 127, for instance 2 mm shorter. The ring 126 may have an axial length of some few centimetres, for instance a length of about 3 cm.

Channels 146, 148 extend through the wall of the sleeve 21 to respective ends of the cavity 127. A channel 147 extends through the wall of the sleeve 21 to a point situated roughly midway of the ends of the cavity 127. The cavity is provided with axially separated sealing rings 144, 145 which seal against the outer surface of the ring 126 in the proximity of its axial ends, also in the axial end position of the ring 126 in the cavity 127.

The conical surface of the sleeve 21 also carries a sealing ring 128 between the cavity and the nearby end of said sleeve, said sealing ring 128 sealing against the conical surface of the inner sleeve 22.

The coupling 2' has the following *modus operandi.*

Pressurised hydraulic fluid, for instance oil, is introduced through the channel 147 so that the ring 126 will be clamped firmly against the inner sleeve 22, and held firm.

Pressurised hydraulic fluid is introduced through the channel 148 to one, or forward, end-chamber 150. Pressurised hydraulic fluid, for instance oil, is also delivered through the channel 26 so as to establish a supportive slide-film "O" between the sleeves 21 and 22 along the greater part of their length between.the ring seals 131, 132, wherewith the pressure in the chamber 150 causes the outer sleeve 21 to move axially "P1" to the right in Figure 6, until the chamber 149 is emptied.

The channel 26 is then relieved of pressure, so that the sleeves 21 and 22 will be prevented from sliding axially.

The pressure in the channel 148 is then removed and thereafter also the pressure in the channel 147, where after hydraulic fluid is delivered through the channel 146 into the rear chamber 149, so as to cause the ring 126 to move in the direction of the arrow "P1", therewith emptying or eliminating the chamber 150.

This is followed by pressurising the channel 147 so as to clamp the ring 126 firmly against the sleeve 22.

In turn, this is followed by again applying pressure to the chamber 150 through the channel 148, and thereafter delivering hydraulic fluid through the channel 26 so that the outer sleeve 21 will be driven axially further up on the end of the inner sleeve 22 until the chamber 149 is empty or eliminated, where after the channel 26 is relieved of pressure, and so on.

The coupling is dismantled in the reverse sequence.

It is important to ensure that the outer sleeve 21 is prevented from sliding freely from the inner sleeve 22 when pressurising the gap between the sleeves in the region between the ring seals 131, 132, because, when mounted, the coupling 2' exerts a high axially-acting driving force on the sleeves 21, 22 as a result of the wedging effect.

The device 125 illustrated in Figures 5 and 6 requires only a small length, in the order of some centimetres, in respect of couplings 2' that have a diameter of, e.g., 70 cm and an axial length of about 1 m.

The axial part or length of the clamping arrangement 25 is defined by the differentce between the lengths of the chambers 149 and 150 and the axial length of the ring 126. The axial length of the ring does not contribute effectively to the transmission of load between the surfaces 21, 22, and is therefore extremely small. The clamping device 125 thus contributes only negligibly to the total mass of the coupling that cannot be utilised for force transmission purposes.

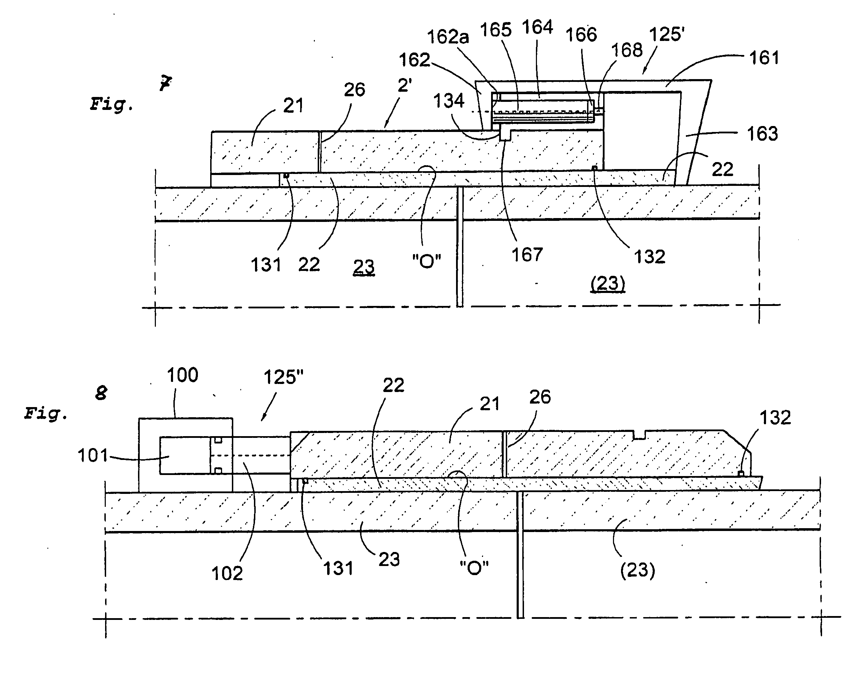

Figure 7 illustrates a further embodiment of another clamping arrangement 125', not being part of the invention, for mounting and dismantling the clamping coupling as a shaft coupling 2'.

The arrangement 125' of the Figure 7 embodiment includes as a separate unit at least one ram, although preferably more than one ram are used, such as two or four rams, uniformly spaced around the coupling 2'.

As will be seen from Figure 7, the ram arrangement 125' includes a pull rod 161 that has two fingers 162, 163 projecting outwardly at right angles therefrom, and an own hydraulic cylinder 164 in which a piston 165 is displaceably mounted, wherewith an outwardly projecting free end of the piston acts against the inside 162a of one finger 162.

The cylinder 164 has an outwardly projecting pin 167 that engages a corresponding recess 134 in the outer surface of the sleeve 21.

Pressurised fluid can be delivered to the oil chamber 166 of the cylinder, through a conduit 168.

The other finger 163 of the pull rod 161 acts against the outwardly projecting end of the inner sleeve 22.

When pressurising the hydraulic cylinder 164, 165, 166, the outer sleeve 21 is drawn axially up on the inner sleeve 22, provided that a supportive oil film "O" has been pressed in between the conical matching surfaces of the sleeves 21 and 22 and between the ring seals 131, 132 via the channel 26.

As with the earlier embodiments, it is important that the supportive oil film "O" is eliminated or drained-off prior to depressurising the ram.

When dismantling the coupling 2' according to Figure 7, the cylinder chamber 166 is pressurised and kept under pressure before pressurised oil is delivered to the channel 26, where after hydraulic fluid is released slowly via the channel 168 so as to allow the outer sleeve 21 to slide from the inner sleeve 22 in a controlled fashion.

The recess 134 may, of course, be replaced with a support shoulder on the outer surface of the sleeve 21, wherewith the cylinder 164 will include a support surface or a recess that co-acts with the shoulder, instead of the finger 167: It will be understood that the shoulder may be capable of being fitted/dismantled to and from the sleeve 21.

It will also be understood that in other embodiments, the ram arrangement may be designed to exert a pressing force rather than a pulling force, in a known manner. In a further embodiment not being part of the invention and illustrated in Figure 8, there may be provided a ram arrangement 125", which, for instance, supports against a shaft 23 and acts directly against the outer sleeve 21 of the coupling.

In this case, the outer sleeve 21 can be moved backwards and forwards in relation to the inner sleeve 22 in a manner earlier described with reference to the use of an oil film "O", with the aid of a support 100 in the form of an hydraulic cylinder 101 and a piston 102 movably mounted in the cylinder.

According to a further development (not shown) of the embodiment illustrated in Figures 5 and 6, the space 127 may also accommodate a further ring, a second ring, in other words the space 127 accommodates two axially separated and axially movable rings.

The second ring also includes oil channels extending through the outer sleeve 21 so as to establish radial clamping of the second ring against the adjacent surface of the sleeve 22 with the aid of pressurised oil delivered through said channels, and to apply pressurised oil against either axial end of the second ring for axial displacement of said ring (after having relieved said ring of its radially acting clamping force).

Before relieving the second ring of its radially acting clamping force, it shall be ensured that the first ring is held in a radially clamping mode. The outer sleeve 21 is therewith prevented from sliding off the inner sleeve 22, even when a supportive oil film "O" is established between the major part of the special length of the sleeves 21, 22.

Correspondingly, the first ring is not relieved of its radial clamping force until the second ring has been clamped radially. The embodiment including two rings in said space enables the essentially supportive oil film "O" to be retained between the seals 131, 132, while using the two rings in said space 127 to drive the outer sleeve 21 up onto the inner sleeve 22 and to enable the outer sleeve 21 to slide off the inner sleeve in a controlled fashion.

In the case of the embodiment that includes two rings in said space, the two oil supply channels opening in the axially bordering regions of the rings can be replaced with a common channel.

The coupling arrangement here above described does need an arrangement for moving the outer sleeve or hub relative to the inner sleeve or the shaft and an arrangement especially preferred in this respect is shown and described in the Swedish patent application no.: 03 02736-4, filed October 17, 2003, and its corresponding International Patent Application, filed concurrently with this application.

It will be understood that the invention is not restricted to the afore described exemplifying embodiments thereof and that modifications can be made within the scope of the inventive concept as defined by the accompanying Claims.

It will be noted in particular that each illustrated unit can be combined with each other illustrated unit within the framework of achieving a desired technical function.

## Claims

1. An arrangement (1) pertaining to a compressive or clamp coupling (2) in which two sleeves (21, 22) are acting compressively against an outer surface (23a) of a shaft (23),
wherein the arrangement (1) is adapted to enable an outer sleeve (21) of the two sleeves to be displaced axially relative to said shaft (23), causing a force, acting between an inner surface (21 a) of said outer sleeve (21) and an outer surface (23a) of the shaft, to achieve a clamping or shrinking action capable of providing a torque-transferring coupling (2),
said arrangement (1) is adapted to include a first means ("A") and a second means ("B"), wherein the first and second means ("A", "B") include a hydraulic piston-cylinder device (125) where said outer sleeve (21) has the function of a displaceable piston and a ring (126) surrounding an inner sleeve (22) of the two sleeves has the function of a fixed cylinder, and **characterised in that**: the second means ("B") is adapted to provide a reduction in and/or a distribution of occurring end-related and radially active compressive forces on the outer shaft surface (23a) or shaft section (23d) from the end-portion or end-portions of said outer sleeve (21).

2. An arrangement according to Claim 1, **characterised in that** the inner sleeve (22) is adapted to surround a respective end-portion of two drivable shafts (23, (23)), where extensions of the centre lines passing through the end surfaces of said shafts coincide with one another.

3. An arrangement according to Claim 1, **characterised in that** said first and second means ("A", "B") are adapted to enable a pulling force to be applied to said outer sleeve (21) and to allow a supportive pressure or counter-pressure to be applied to said inner sleeve (22).

4. An arrangement according to Claim 1, **characterised in that** said first and second means ("A", "B") include a ring-shaped recess (127), wherein the ring (126) is placed in said recess (127) and has generally the same radial dimension as said recess (127) although a shorter axial length than said recess (127).

5. An arrangement according to Claim 4, **characterised in that** a channel (147) is arranged for introducing a pressurised hydraulic fluid (oil) between said recess (127) and said ring (126) for clamping said ring (126) firmly against said inner sleeve (22), and channels for conducting pressurised hydraulic fluid to and from the axial ends of the recess (127), respectively.

6. An arrangement according to Claim 1, **characterised in that** said second means ("B") is further comprised of a selected reduction in material and a reduction in bending resistance in connection with an end-portion or end-portions (21 b, 21 c) of the outer sleeve (21).

7. An arrangement according to Claim 1, **characterised in that** said outer sleeve (21) further has externally on one end-portion thereof a recess that greatly reduces the radial thickness of the outer sleeve (21) along a short distance in a direction towards the axial end of the outer sleeve (21).

## Patentansprüche

1. Anordnung (1), die eine Druck- oder Klemmkupplung (2) betrifft, bei der zwei Hülsen (21, 22) komprimierend gegen eine äußere Oberfläche (23a) einer Welle (23) wirken,
wobei die Anordnung (1) dazu ausgelegt ist, zu ermöglichen, dass eine äußere Hülse (21) der beiden Hülsen axial relativ zu der Welle (23) verlagert werden kann, wodurch eine Kraft hervorgerufen wird, die zwischen einer inneren Oberfläche (21 a) der äußeren Hülse (21) und einer äußeren Oberfläche (23a) der Welle wirkt, um eine Klemm- oder Schrumpfwirkung zu erreichen, die eine Drehmoment übertragende Kupplung (2) leisten kann,
wobei die Anordnung (1) dazu ausgelegt ist, erste Mittel ("A") und zweite Mittel ("B") zu enthalten, wobei die ersten und zweiten Mittel ("A", "B") eine hydraulische Kolben-Zylindereinrichtung (125) enthalten, wobei die äußere Hülse (21) die Funktion eines verlagerbaren Kolbens hat, und ein Ring (126), der eine innere Hülse (22) der beiden Hülsen umgibt, die Funktion eines feststehenden Zylinders hat, und **dadurch gekennzeichnet, dass** die zweiten Mittel ("B") dazu ausgelegt sind, eine Verringerung und/oder eine Verteilung von auftretenden endbezogenen und radial aktiven Druckkräften an der äußeren Wellenoberfläche (23a) oder dem Wellenabschnitt (23d) von dem Endabschnitt oder den Endabschnitten der äußeren Hülse (21) zu leisten.

2. Anordnung nach Anspruch 1, **dadurch gekennzeichnet, dass** die innere Hülse (22) dazu ausgelegt ist, einen entsprechenden Endabschnitt der beiden antriebsfähigen Wellen (23, (23)) zu umgeben, wobei Verlängerungen der Mittellinien, die durch die Stirnflächen der Wellen verlaufen, miteinander übereinstimmen.

3. Anordnung nach Anspruch 1, **dadurch gekennzeichnet, dass** die ersten und zweiten Mittel ("A", "B") dazu ausgelegt sind, zu ermöglichen, dass eine Zugkraft auf die äußere Hülse (21) ausgeübt wird, und zuzulassen, dass ein unterstützender Druck oder Gegendruck auf die innere Hülse (22) ausgeübt wird.

4. Anordnung nach Anspruch 1, **dadurch gekennzeichnet, dass** die ersten und zweiten Mittel ("A", "B") eine ringförmige Ausnehmung (127) enthalten, wobei der Ring (126) in der Ausnehmung (127) angeordnet ist und im Allgemeinen die gleiche radiale Abmessung wie die Ausnehmung (127), jedoch eine kürzere axiale Länge als die Ausnehmung (127) aufweist.

5. Anordnung nach Anspruch 4, **dadurch gekennzeichnet, dass** ein Kanal (147) dazu ausgelegt ist, ein mit Druck beaufschlagtes hydraulisches Fluid (Öl) zwischen der Ausnehmung (127) und dem Ring (126) einzuleiten, um den Ring (126) fest gegen die innere Hülse (22) zu klemmen, und Kanäle dazu ausgelegt sind, mit Druck beaufschlagtes hydraulisches Fluid zu bzw. von den axialen Enden der Ausnehmung (127) zu leiten.

6. Anordnung nach Anspruch 1, **dadurch gekennzeichnet, dass** die zweiten Mittel ("B") ferner eine ausgewählte Verringerung von Werkstoff und eine Verringerung des Biegewiderstands in Verbindung mit einem Endabschnitt oder Endabschnitten (21 b, 21 c) der äußeren Hülse (21) umfasst.

7. Anordnung nach Anspruch 1, **dadurch gekennzeichnet, dass** die äußere Hülse (21) ferner außen an ihrem einen Endabschnitt eine Ausnehmung aufweist, die die radiale Dicke der äußeren Hülse (21) über eine kurze Strecke in einer Richtung zu dem axialen Ende der äußeren Hülse (21) stark verringert.

## Revendications

1. Système (1) faisant partie d'un accouplement compressif (2) ou à pince, dans lequel deux manchons (21, 22) agissent de façon compressive contre une surface extérieure (23a) d'un arbre (23),
le système (1) étant conçu pour permettre à un manchon extérieur (21) parmi les deux manchons d'être déplacé axialement par rapport audit arbre (23), engendrant une force agissant entre une surface intérieure (21 a) dudit manchon extérieur (21) et une surface extérieure (23a) de l'arbre pour réaliser une action de serrage ou de rétrécissement capable d'assurer un accouplement (2) avec transfert de couple,
ledit système (1) étant conçu pour comprendre un premier moyen ("A") et un deuxième moyen ("B"), les premier et deuxième moyens ("A", "B") comprenant un dispositif hydraulique (125) piston-cylindre où ledit manchon extérieur (21) tient la fonction d'un piston déplaçable et où une bague (126) entourant un manchon intérieur (22) parmi les deux manchons tient la fonction d'un cylindre fixe, et **caractérisé en ce que** le deuxième moyen ("B") est conçu pour assurer une réduction et/ou une répartition de forces de compression exercées en liaison avec les extrémités et agissant radialement sur la surface extérieure (23a) de l'arbre ou la section (23d) de l'arbre à partir de la ou des parties d'extrémité dudit manchon extérieur (21).

2. Système selon la revendication 1, **caractérisé en ce que** le manchon intérieur (22) est conçu pour entourer une partie d'extrémité respective de deux arbres (23, (23)) susceptibles d'être entraînés, des prolongements des axes de symétrie traversant les surfaces d'extrémité desdits arbres coïncidant entre eux.

3. Système selon la revendication 1, **caractérisé en ce que** lesdits premier et deuxième moyens ("A", "B") sont conçus pour permettre l'application d'une force de traction audit manchon extérieur (21) et pour permettre l'application d'une pression d'appui ou d'une contre-pression audit manchon intérieur (22).

4. Système selon la revendication 1, **caractérisé en ce que** lesdits premier et deuxième moyens ("A", "B") comprennent un évidement annulaire (127), la bague (126) étant placée dans ledit évidement (127) et présentant généralement la même cote radiale que ledit évidement (127), mais une longueur axiale inférieure à celle dudit évidement (127).

5. Système selon la revendication 4, **caractérisé en ce qu'**un conduit (147) est aménagé pour introduire un fluide hydraulique (huile) sous pression entre ledit évidement (127) et ladite bague (126) pour serrer fermement ladite bague (126) contre ledit manchon intérieur (22), ainsi que des conduits servant à acheminer le fluide hydraulique sous pression respectivement vers et en provenance des extrémités axiales de l'évidement (127).

6. Système selon la revendication 1, **caractérisé en ce que** ledit deuxième moyen ("B") est en outre composé d'une réduction choisie de matière et d'une réduction de résistance à la flexion an liaison avec une ou des parties (21 b, 21 c) d'extrémité du manchon extérieur (21).

7. Système selon la revendication 1, **caractérisé en ce que** ledit manchon extérieur (21) comporte en outre extérieurement, sur une de ses parties d'extrémité, un évidement qui réduit fortement l'épaisseur radiale du manchon extérieur (21) sur une courte distance dans la direction de l'extrémité axiale du manchon extérieur (21).
